# EUROPÄISCHE PATENTSCHRIFT

(11) **EP 1 165 407 B1**
(45) Veröffentlichungstag und Bekanntmachung des Hinweises auf die Patenterteilung: **10.12.2003**
(21) Anmeldenummer: 00916972.3
(22) Anmeldetag: 17.03.2000
(51) Int. Cl.: B65G 1/00

(54) **FÖRDEREINRICHTUNG ZUM ZUFÜHREN VON KLEINTEILEN ZU EINER KETTENMONTAGE-EINHEIT**
CONVEYOR SYSTEM FOR FEEDING SMALL PARTS TO A CHAIN ASSEMBLY UNIT
CONVOYEUR POUR ACHEMINER DE PETITES PIECES JUSQU'A UNE UNITE DE MONTAGE A LA CHAINE

(30) Priorität: 06.04.1999 DE 19915443
(43) Veröffentlichungstag der Anmeldung: 02.01.2002
(73) Patentinhaber: JOH. WINKLHOFER & SÖHNE GmbH & Co KG, D-81369 München (DE)
(72) Erfinder: MITZENHEIM, Heinz, D-81379 München (DE); SCHILP, Michael, 85748 Garching (DE); VALYI, Claudia, 81379 München (DE); HÖPPNER, Jürgen, 85777 Fahrenzhausen (DE)
(74) Vertreter: Grünecker, Kinkeldey, Stockmair & Schwanhäusser Anwaltssozietät
(86) Internationale Anmeldenummer: EP0002402
(87) Internationale Veröffentlichungsnummer: WO00059809

(56) Entgegenhaltungen:
- CH-A- 489 392
- FR-A- 1 281 021
- US-A- 3 554 372
- US-A- 4 635 784

## Beschreibung

Die vorliegende Erfindung betrifft eine Fördereinrichtung zum Zuführen von Kleinteilen zu einer Kettenmontage-Einheit, mit einem die Kleinteile transportierenden Bahnensystem und mit einer das Bahnensystem mit den Kleinteilen beladenen Zuführeinrichtung, wobei das Bahnensystem mindestens zwei von der Zuführeinrichtung mit Kleinteilen beladbare Beladebahnen und mindestens eine die Kleinteile zur Kettenmontage-Einheit weiterleitbare, mit jeweils mindestens einer Beladebahn in Verbindung stehende Zuführbahn umfaßt, wobei die Anzahl der Zuführbahnen geringer ist als die Anzahl der Beladebahnen und die mindestens eine Zuführbahn wahlweise mit jeweils mindestens einer anderen Beladebahn zum Fördern der Kleinteile in Verbindung bringbar ist, und wobei den Beladebahnen und den Zuführbahnen eine Weicheneinrichtung zum wahlweisen Verbinden mindestens einer bestimmten Beladebahn mit mindestens einer bestimmten Zuführbahn vorgesehen ist.

Einen entscheidenden Einfluß auf die produzierbare Stückzahl von Kettengliedern in einer Kettenmontage-Einheit hängt maßgeblich von der Leistungsfähigkeit der Förder- bzw. Zubringeinrichtungen ab. Diese Fördereinrichtungen müssen Werkstücke, insbesondere Kettenkleinteile wie Bolzen, Hülsen und Laschen etc. in ausreichender Menge dem Fügeprozeß zur Verfügung stellen. Für einen störungsarmen Fügevorgang ist es notwendig, daß die Fördereinrichtung eine hohe Verfügbarkeit aufweist. Um dies zu erreichen, sind im Stand der Technik verschiedene Lösungsansätze gemacht worden, z. B. ein redundanter Einsatz von Zuführeinrichtungen, eine komplette Entkopplung der Funktionen Bunkern, Fördern, Ordnen vom Fügeprozeß durch Vormagazinierung der Bauteile etc. Eine z.Zt. bevorzugte Zuführeinrichtung auf dem Bereich der Kettenmontage ist ein Vibrationswendelförderer, der sich insbesondere für die Zuführung von Hülsen und Bolzen eignet. Jedoch sind auch diesem Systemen insbesondere dann Grenzen gesetzt, wenn bei der Förderung von zylindrischen Bauteilen ein DurchmesserVerhältnis zwischen 1 und 1,5 vorliegt. Bei diesen Abmessungen neigen die Bauteile zum Verklemmen in den Schikanen und führen vermehrt zu Störungen. Bei der Kettenmontage sind z.Zt. Stückzahlen von über 350 Stück/min üblich. Der limitierende Faktor stellt in diesem System jedoch meistens die Fördereinrichtung dar, den kürzlich entwickelte Fügeverfahren könnten mit einer weitaus höheren Stückzahl betrieben werden.

Eine gattungsbildende Fördereinrichtung ist aus der US 4 635 784 bekannt. Diese Fördereinrichtung besteht aus einem Magazin mit einer Vielzahl von Kanälen zum Zwischenspeichern des Förderguts, einem Bereich zum Aufnehmen des Förderguts und einem längsseits unterhalb des Magazins angeordneten Transportsystems. Das Magazin ist seitlich verschiebbar, um bei Bedarf einen anderen Kanal mit dem Aufnahmebereich und dem Transportsystem in Eingriff zu bringen. Eine Schranke regelt den Einund Austritt des Förderguts in die Fördereinrichtung. Ist ein Kanal des Magazins voll oder leer, wird das Magazin seitlich verschoben und entsprechend ein leerer oder voller Kanal mit dem Transportsystem in Eingriff gebracht, um eine unterbrechungsfreie Förderung des Förderguts im Transportsystem zu gewährleisten.

Aus der US 3 554 372 ist eine weitere Vorrichtung für eine Fördereinrichtung bekannt. Diese Vorrichtung ermöglicht eine gezielte Verteilung von in Kanälen transportierten Fördergut, wobei eine sehr hohe Anzahl von Gegenständen gezielt verteilt werden kann.

Es ist daher die Aufgabe der vorliegenden Erfindung, eine Fördereinrichtung bereitzustellen, die mittels einfacher und kostengünstiger Konstruktionsweise eine hohe Verfügbarkeit an Kleinteilen bereitstellt.

Diese Aufgabe wird erfindungsgemäß dadurch gelöst, daß die Weicheneinrichtung ein Kanalsystem umfasst, dessen Einlässe mit jeweils einer Beladebahn in Verbindung stehen und dessen mindestens ein Auslaß mit jeweils einer Zuführbahn in Verbindung steht und dass mindestens zwel Einlaßkanäle an mindestens einer Kanalkreuzung zusammentreffen und als gemeinsamer Auslaßkanal weitergeführt sind.

Das Umschalten bzw. Inverbindungbringen einer Zuführbahn einer Fördereinrichtung mit einer anderen Beladebahn durch die Weicheneinrichtung kann aufgrund verschiedenster Umstände und Notwendigkeiten erfolgen. Kommt es in einer Beladebahn, die mit der Zuführbahn in Verbindung steht, zu Störungen, wird auf eine andere Beladebahn umgeschaltet. Die Störung an der nunmehr entkoppelten Beladebahn kann dann unabhängig von dem Materialfluß behoben werden. Die gerade nicht an der Förderung beteiligten Beladebahnen dienen somit als Puffer, der durch entsprechendes Verbinden mit der Zuführbahn, z.B. im Falle einer Störung oder durch bewußtes Umschalten des Benutzers an der Förderung beteiligt wird. Die Zuführeinrichtung nimmt dann gleichzeitig auch die kontinuierliche Befüllung der Beladebahn wieder vor. Mit welcher Beladebahn eine Zuführbahn gerade in Verbindung steht, kann von einer Vielzahl von Kriterien abhängig sein und kann manuell oder automatisch gesteuert erfolgen.

Die Weicheneinrichtung muß so ausgestaltet sein, daß sie einen weiteren Ausfluß aus der aktuell verbundenen Beladebahn verhindert oder diesen komplett abwartet und anschließend auf eine andere Beladebahn übergeht. Solche Weicheneinrichtungen können sehr einfach aufgebaut und auf vielfältige Weise gesteuert sein, weshalb sie sehr präzise und sehr schnell arbeiten können. Demnach wird selbst bei sehr hohem Förderstrom ein genaues Umschalten möglich sein.

Die Weicheneinrichtung umfaßt ein vorgegebenes Kanalsystem, durch das die Kleinteile automatisch in Abhängigkeit von der jeweils durchgeschalteten Beladebahn geleitet werden. Zusätzliche Weichenelemente sorgen für die entsprechende Weiterleitung der Kleinteile.

Eine solche Konstruktion kann auf sehr kleinem Bauraum vorgenommen werden und es ist lediglich eine Länge der Beladebahnen erforderlich, um ein gesichertes Beladen und im Falle eines Umschaltens der Zuführbahn eine ausreichende Verfügbarkeit aufrechtzuerhalten bzw. sicherzustellen.

Obwohl andere Zuleitungen auch realisierbar sind, läßt sich die Fördereinrichtung gemäß einer Variante am besten dadurch vereinfachen, daß die Anzahl der Beladebahnen ein durch die Zahl 2 teilbares Vielfaches der Anzahl der Zuführbahnen ist. Hierdurch kann sichergestellt werden, daß kurzmöglichste Umschalt-, Verschiebe- etc. Wege für ein sicheres Reagieren im z.B. Störungsfall sorgen. Hierdurch lassen sich nämlich die jeweils einander abwechselnden Bahnen unmittelbar nebeneinander, ohne daß eine weitere Bahn dazwischen angeordnet ist, positionieren.

Um eine gute Information darüber zu erlangen, wann ein Verbinden einer Zuführbahn mit einer anderen Beladebahn erforderlich ist, kann eine Überwachungseinrichtung vorgesehen sein, die das Beladen der Beladebahn überwacht und Signale für eine störungsfreie Zuordnung von Beladebahnen und Zuführbahnen abgibt. Im einfachsten Falle kann überprüft werden, ob an der Verbindungsstelle zwischen Beladebahn und Zuführbahn noch ein Förderstrom aufrechterhalten ist. Sobald dann keine Kleinteile mehr die Verbindungsstelle passieren, erfolgt ein Wechsel der Zuführbahn zu bevorzugter benachbarter Beladebahn. Es kann auch eine Überwachung erfolgen, ob Fremdteile, beschädigte Teile oder in ihrer Positionierung falsche Teile sich in der Beladebahn befinden. Das von der Überwachungseinrichtung abgegebene Signal kann dann über eine entsprechende Verarbeitungseinheit als Steuersignal zum automatischen Wechsel auf eine andere Beladebahn herangezogen werden.

In einer günstigen Ausführungsform umfaßt die Weicheneinrichtung Schieberelemente, die jeweils zum Sperren oder Freigeben eines Einlaßkanals und/oder einer Beladebahn in diese ein- und ausfahrbar sind. In Abhängigkeit von der Größe der Kleinteile kommen hier auch einfach ausführbare Stifte bzw. Bolzen in Frage. Diese Schieberelemente können in eine zugeordnete Bahn bzw. einen zugeordneten Kanal unter einem bestimmten Winkel oder aufgrund ihrer Formgebung derart eingefahren werden, daß eine möglichst große Klemmwirkung erzielt wird, falls sich ein Kleinteil im Verschiebeweg des Schieberelementes befindet. Hierdurch ist das Schieberelement nicht darauf angewiesen, exakt in die Lücke zwischen die Kleinteile zu treffen.

Aus Sicherheitsgründen kann jeder Kanalkreuzung der Weicheneinrichtung zum Sperren oder Freigeben des zuführenden Kanals ein Schieberelement zugeordnet sein. Hierdurch können Überwachungseinrichtungen, die die Freigabe einer Kanalkreuzung überwachen, entfallen. Es muß nämlich sichergestellt werden, daß an einer Kanalkreuzung nicht von beiden zuführenden Kanälen gleichzeitig Kleinteile zugeführt werden. Dies könnte zu einer Verklemmung und zur Unterbrechung des Materialflusses führen.

Insbesondere kann eine Steuereinrichtung vorgesehen sein, die in Abhängigkeit vom Überwachungssignal der Überwachungseinrichtung die Weicheneinrichtung steuert. Aus Verschteißgründen könnte eine solche Steuereinrichtung auch eine manuelle Umschaltung zulassen, so daß die Beladebahnen möglichst alle gleichmäßig beansprucht werden.

Des weiteren kann die Steuereinrichtung derart ausgebildet sein, daß die Verbindung einer Beladebahn zu einer Zuführbahn erst freigegeben ist, wenn die mindestens eine zugehörige Kanalkreuzung der Weichenrichtung frei von Kettenteilen ist. Die Steuereinrichtung steuert entweder zum richtigen Zeitpunkt oder mit Hilfe zusätzlicher Elemente die Weicheneinrichtung derart um, daß eine Kollision im Kanalkreuzungsbereich verhindert wird.

Die Förderung der Kleinteile in den Beladebahnen und den Zuführbahnen kann auf unterschiedlichste Weise erfolgen. Zwar wird gemäß einer Ausführungsform die Förderung mittels Schwerkraft aus Kostengründen bevorzugt, jedoch ist auch eine Zwangsführung mittels Vibration oder mittels Druckluft etc. möglich. Durch eine solche Zwangsförderung könnte der Durchsatz noch erheblich gesteigert werden. Wichtig ist vor allen Dingen, daß aufgrund der Ausgestaltung der Beladebahnen und der Zuführbahnen eine kontinuierliche Förderung sichergestellt ist.

Um eine ausreichende Stückzahl an Kleinteilen auf die Beladebahnen zu fördern, hat sich als Zuführeinrichtung insbesondere ein rotierender Fördertopf mit innen angeordneten Schaufeln herausgestellt, der die Kleinteile in den zumindest im vorderen Bereich oben offenen Abschnitt der Beladebahnen fördert. Die Beladebahnen sind dann bevorzugt mit ihrem vorderen Bereich im Bereich der Drehachse innerhalb des Fördertopfs angeordnet, so daß mittels der Schaufeln die Kleinteile in die Beladebahnen befördert werden. Ein solcher Fördertopf hat eine weitaus höhere Austragsteistung als bislang verwendete Vibrationsförderer und ist zudem äußerst robust. Das bedeutet, daß er unempfindlich gegenüber verschmutzten Teilen ist und Fremdteile nicht zu einem Versagen des Fördertopfs führen. Der Fördertopf kann auch mit Sieben bzw. Siebenwänden ausgestattet sein, so daß nicht gewünschte Kleinteile bzw. Verschmutzungen automatisch entfernt werden. Des weiteren läßt sich eine beliebige Anzahl an Beladebahnen parallel anordnen, die mit einer ausreichenden Anzahl an Kleinteilen beladbar sind. Da es sich auf dem Gebiet der Kettenmontage um meist unempfindliche Kleinteile handelt, eignet sich ein solcher Fördertopf hervorragend für die Bereitstellung einer extrem hohen Verfügbarkeit.

Des weiteren kann ein Abstreifelement, insbesondere eine Abstreifrolle und/oder - Schieber vorgesehen sein, der oder das im Zusammenspiel mit dem Fördertopf dem vorderen Bereich der Beladebahnen zugeordnet ist, wobei falsch orientierte Kleinteile abgestrichen bzw. richtig orientiert in die Beladebahnen eingeschoben werden. Das Abstreifelement unterstützt somit die lagerichtige Positionierung der Kleinteile in den Beladebahnen. Insbesondere sollte durch ein derartiges Abstreifelement aufrechtstehende Kleinteile umgelegt werden.

Eine weitere Vereinfachung wird dadurch erzeugt, daß die Beladebahnen und/oder der das Kanalsystem der Weicheneinrichtung umfassende Bestandteil als oben offene Nutenbahnen in im wesentlichen einem gemeinsamen Grundkörper ausgestaltet sind.

Im folgenden werden Ausführungsbeispiele der Erfindung anhand von Zeichnungen näher erläutert. Es zeigen:
- Fig. 1: eine schematische Darstellung eines Bahnensystems einer Fördereinrichtung, wobei in drei Stufen der Umschaltvorgang bei Auftritt einer Störung gezeigt ist.
- Fig. 2: eine schematische Draufsicht auf eine weitere Ausführungsform einer Fördereinrichtung,
- Fig. 3: eine schematische Querschnittsdarstellung des Bahnensystems mit weichen Elementen,
- Fig. 4: eine perspektivische Darstellung eines Rotationstopfs als Zuführeinrichtung zum Bahnensystem,
- Fig. 5: eine Draufsicht auf eine Ausführungsform einer Weichenschiene,
- Fig. 6: eine Vorderansicht der Weichenschiene aus Fig. 5,
- Fig. 7: eine Draufsicht auf eine weitere Ausführungsform einer Weichenschiene und
- Fig. 8: eine Vorderansicht auf die Weichenschiene aus Fig. 7.

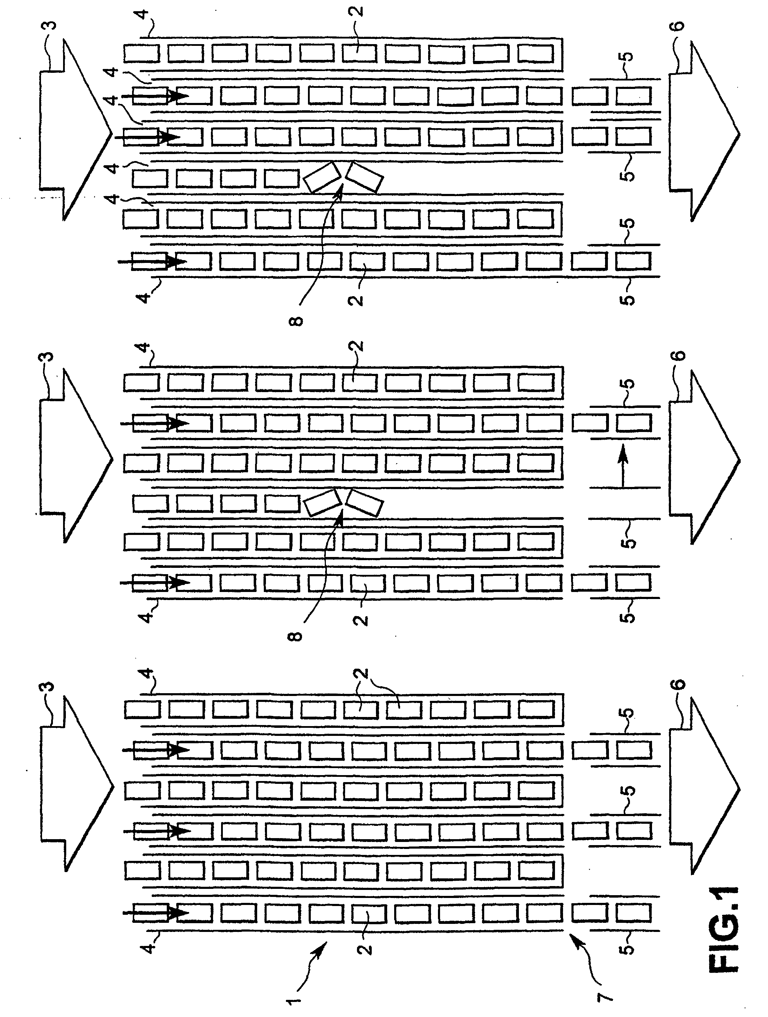

Auf der linken Seite der Fig. 1 ist ein Bahnensystem 1 gezeigt, das störungsfrei arbeitet und zum Transportieren von Kleinteilen 2, im vorliegenden Falle handelt es sich um Gelenkhülsen für Ketten, geeignet ist. Dem Bahnensystem 1 wird über eine in Fig. 1 nicht näher dargestellte Zuführeinrichtung 3 kontinuierlich Kleinteile 2 zugeführt. Die Zuführeinrichtung 3 sorgt dafür, daß die Kleinteile 2 lagerichtig in das Bahnensystem 1 eingebracht werden. In der dargestellten Ausführungsform umfaßt das Bahnensystem sechs Beladebahnen 4, die sämtlich von der Zuführeinrichtung 3 mit Kleinteilen 2 beladen werden. Bei den Beladebahnen 4 kann es sich um jegliche geeignete Bahnführung, wie Schienenführungen, geschlossene Kanäle (z.B. Hohlprofile) oder ähnliches handeln. Bevorzugt sind die Beladebahnen 4 nach unten geneigt, so daß die Kleinteile 2 aufgrund der Schwerkraft gefördert werden. Hierdurch wird sichergestellt, daß immer Kleinteile 2 nachladbar sind.

Des weiteren umfaßt das Bahnensystem 1 drei Zuführbahnen 5, die die Kleinteile 2 einem nicht näher dargestellten Fügekopf 6 einer Kettenmontageeinheit zuführen. Jede Zuführbahn 5 ist jeweils zwei Beladebahnen 4 zugeordnet. Die erste Zuführbahn 5 ist der ersten und zweiten Beladebahnen 4 (von links nach rechts), die zweite Zuführbahn 5 der dritten und vierten Beladebahn 4 und die dritte Zuführbahn 5 der fünften und sechsten Beladebahn 4 zugeordnet. Andere Zuordnungen können sinnvollerweise Anwendungen finden. Insbesondere läßt sich eine Zuführbahn 5 mehr als zwei Beladebahnen 4 zuordnen. Das bedeutet, daß die Zuführbahnen 5 im Verbindungsbereich 7 mit jeweils einer anderen Beladebahn 4 in Verbindung bringbar sind. In der linken Darstellung der Fig. 1 ist die erste Zuführbahn 5 mit der ersten Beladebahn, die zweite Zuführbahn 5 mit der dritten Beladebahn 4 und die dritte Zuführbahn 5 mit der fünften Beladebahn 4 verbunden. Die zweite, vierte und sechste Beladebahn 4 dienen jeweils als Puffer. Die Zuführeinrichtung ist so konzipiert, daß diese Puffer immer voll gehalten werden, jedoch, wenn diese einmal voll sind, keine weiteren Kleinteile 2 mehr in diese gefördert werden.

Entsprechende, nicht näher dargestellte Absperr-Einrichtungen sorgen dann dafür, daß die als Puffer dienenden Beladebahnen an dem dem Verbindungsbereich 7 zugewandten Ende verschlossen sind.

Die linke Darstellung der Fig. 1 zeigt nun den Ausgangszustand der Förderung von Kleinteilen 2. Kommt es nun, wie in der mittleren Darstellung der Fig. 1 gezeigt ist, in einer der Beladebahnen 4 zu einer Störung (im vorliegenden Fall die dritte Beladebahn 4), so reißt an dieser Stelle der Förderstrom ab und die zweite Zuführbahn 5 wird nicht mehr mit Kleinteilen 2 versorgt. Damit es in der zweiten Zuführbahn 5 nicht zu einem den Montagevorgang beeinträchtigenden Abreißen des Förderstroms kommt, ist nunmehr eine Sicherung eingebaut. Nicht näher dargestellte Sensoren erfassen im Verbindungsbereich 7, oder an jeder anderen geeigneten Stelle, das Abreißen des Förderstroms und leiten einen Umschaltvorgang ein. Mit der Bezugsziffer 8 ist die Störstelle in der dritten Beladebahn 4 gekennzeichnet, die aufgrund von einem Verklemmen der Hülsen 2 eingetreten ist. Das dem Verbindungsbereich 7 zugewandte Ende der zweiten Zuführbahn 5 wird nunmehr von der dritten Beladebahn 4 auf die vierte Beladebahn 4 umgeschaltet. Gleichzeitig wird das dem Verbindungsbereich 7 zugewandte Ende der vierten Beladebahn 4 geöffnet, so daß augenblicklich Kleinteile 2 von der vierten Beladebahn 4 in die zweite Zuführbahn 5 gefördert werden können. Dieser Vorgang erfolgt derart schnell, daß es am Fügekopf 6 nicht zum Abreißen des Kleinteilestroms kommt. Hierzu ist es zusätzlich erforderlich, daß die Zuführeinrichtung 3 in der Lage ist, Kleinteile 2 schneller auf die Beladebahn 4 zu fördern, als sie im Bereich des Fügekopfs abgeführt werden.

Befindet sich nunmehr die Vorrichtung in der in der Fig. 1 rechten Stellung, so kann die Störung in der dritten Beladebahn 4 behoben werden.

Um ein gutes Funktionieren dieses schematisch dargestellten Mechanismus zu gewährleisten, müssen sowohl Vorkehrungen getroffen werden, die ein zügiges und sauberes Beladen der Beladebahnen 4 ermöglichen, als auch eine ausreichende Überwachung, z.B. durch Sensoren, stattfinden, die sofort eine Störung erkennen. Des weiteren muß im Verbindungsbereich 7 ein Mechanismus vorhanden sein, z.B. ein Weichenmechanismus, der ein sauberes und störungsfreies Verbinden der Zuführbahnen 5 mit den Beladebahnen 4, insbesondere während eines Umschaltvorgangs, ermöglicht. Diese Funktionen können von einer Vielzahl von verschiedenen Mechanismen erfüllt werden. Im folgenden sind beispielhafte Ausführungen beschrieben.

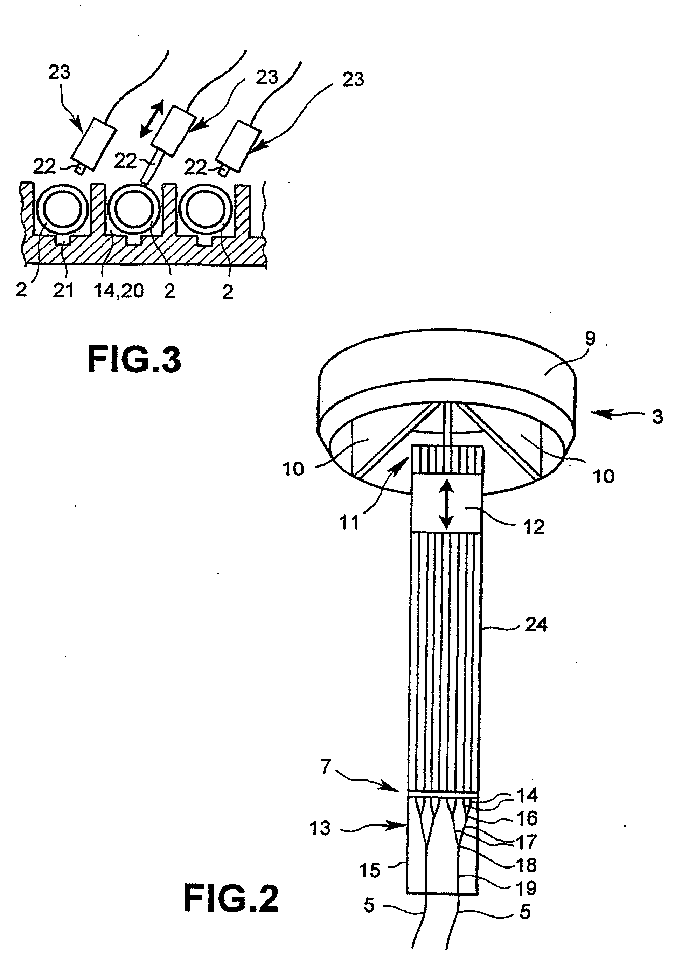

Gemäß der Fig. 2 wird als Zuführeinrichtung 3 ein um eine Achse drehender Rotationstopf 9 verwendet. Solche Rotationstöpfe 9 umfassen im Innern angeordnete Schikanen 10 und sind in der Lage, große Mengen an Kleinteilen 2 auf mehreren Förderbahnen zuzuführen. Die Kleinteile 2 werden im Innern des Rotationstopfes 9 angeordnet und werden aufgrund der Mitnahme durch die Schikanen 10 auf den vorderen Bereich 11 der Beladebahnen 4 gefördert. Dieser vordere Bereich 11 der Beladebahnen 4 ist oben offen, so daß die Kleinteile 2 durch bloßes Aufschütten auf diesen Bereich 11 in die einzelnen Beladebahnen 4 eindringen können. Ein sich hin- und herbewegender Abstreifer bzw. Schieber 12 sorgt dann dafür, daß die Kleinteile 2 lagerichtig in den Bahnen 4 angeordnet werden und überschüssige Kleinteile zurück in den Rotationstopf 9 fallen. Da sämtliche Beladebahnen 4 oben offen sind, werden auch sämtliche, im vorliegenden Fall 8, Beladebahnen 4 mit Kleinteilen 2 versorgt. Die Breite der Beladebahnen 4 ist i.R. kleiner als die Länge der Kleinteile. Die Beladebahnen 4, die zur Zeit als Puffer dienen, stellen hierbei kein Hindernis dar, da sie aufgrund ihrer kompletten Füllung keine zusätzlichen Kleinteile 2 mehr aufnehmen können und der Schieber 12 überschüssige Kleinteile 2 wieder abstreift.

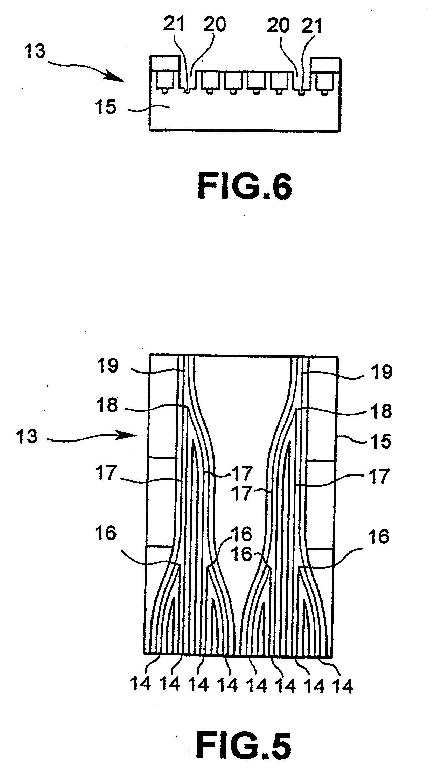

Auch im vorliegenden Fall erfolgt das Fördern der Kleinteile 2 in den Beladebahnen 4 mittels der Schwerkraft, indem die Beladebahnen 4 schräg nach unten verlaufen. Die Steigung der Schräge ist dabei so gewählt, daß eine ausreichende Fördergeschwindigkeit vorliegt, und es nie zum Abreißen des Kleinteilstroms am Fügekopf 6 kommt. Eine Zwangsförderung der Kleinteile 2 kann auch vorgesehen sein, z.B. durch Vibration oder Druckluftförderung. Im Verbindungsbereich 7 schließt sich im vorliegenden Fall eine Weicheneinrichtung 13 an. Die Weicheneinrichtung 13 umfaßt ein Kanalsystem, das 8 Einlässe 14 aufweist, wobei jeder Einlaß 14 mit dem Ende eines der Beladebahnen 4 in Verbindung steht. In der Fig. 5 und 6 ist der das Kanalsystem tragende Grundkörper 15 der Weicheneinrichtung 13 dargestellt. Jeweils zwei Einlaßkanäle 14 werden an einer Kanalkreuzung 16 zu einem gemeinsamen Zwischenkanal 17 zusammengeführt. Diese Zwischenkanäle 17 werden wiederum an einer gemeinsamen zweiten Kanalkreuzung 18 zu einem gemeinsamen Austaßkanal 19 zusammengeführt. Die Auslaßkanäle 19 stehen dann wiederum mit jeweils einer Zuführbahn 5 in Verbindung.

Das bedeutet, daß jede Zuführbahn 5 mit vier Beladebahnen 4 in Verbindung steht. Das eröffnet eine Reihe von Fördermöglichkeiten, die eine entsprechende Steuerung und Überwachung der Weicheneinrichtung 13 erforderlich macht. Wichtig ist vor allen Dingen, daß in den Bereich einer Kanalkreuzung 16 oder 18 jeweils nur ein Kleinteil 2 gelangt, so daß es an dieser Stelle nicht zu einem Blockieren kommt. Das bedeutet, daß jeweils nur ein einziger zu einer der Kanalkreuzung 16 oder 18 hinführenden Kanalabschnitte mit dem wegführenden Kanalabschnitt in Verbindung stehen kann. Diese Verbindung kann aber auch abwechselnd erfolgen, solange für eine reibungsfreie Förderung im Kreuzungsbereich gesorgt ist. Im Extremfall bedeutet das bei der in Fig. 2 und den Fig. 5 und 6 dargestellten Variante, daß jeder Zuführbahn 5 drei als Puffer dienende Beladebahnen 4 zugeordnet sind. Jede der Beladebahnen 4 muß demnach in der Lage sein, eine ausreichende Zuführung von Kleinteilen zur Zuführbahn 5 zu gewährleisten. Sobald es in einer der Beladebahnen 4 zu einer Störung kommt, wird auf eine andere Beladebahn 4 entsprechend einer Weicheneinstellung umgeschaltet. Dieses Umschalten kann auch immer chargenweise erfolgen. Sobald z.B. eine der als Puffer dienenden Beladebahnen 4 wieder vollständig gefüllt ist, kann diese mit einer Zuführbahn 5 durchgeschaltet werden, so daß der gesamte Inhalt schnellstmöglich in die Zuführbahn 5 gefördert werden kann. Dieser Vorgang kann dann mit einer größeren Geschwindigkeit erfolgen, als das Zuführen der Kleinteile 2 auf die einzelnen Beladebahnen 4 selbst. Dieser Vorgang ist mit Hilfe von 4 zusammenarbeitenden Beladebahnen 4 auch im Falle einer Störung ohne weiteres aufrechtzuerhalten.

Anhand der Fig. 6 ist zu erkennen, daß es sich bei den Kanälen im Grundkörper 15 um oben offene, im Querschnitt rechteckförmige Nuten 20 handelt. Die Nuten 20 können an ihrem Grund noch eine kleine Längsnut 21 aufweisen, die z.B. zur Aufnahme von Schmutzpartikeln dient.

Anhand der Fig. 3 ist nunmehr eine Möglichkeit dargestellt, die Beladebahnen 4 bzw. die Weicheneinrichtung 13 zu blockieren bzw. freizuschalten. Hierzu werden jeweils mit einem Stößel 22 versehene Schieberelemente 23 verwendet. Diese Schieberelmente 23 können auch in den Bahnen bzw. den Nuten angeordnet sein. Es handelt sich bei der Darstellung nur um eine der möglichen Varianten. Der Stößel 22 des Schieberelements 23 kann ein- und ausgefahren werden. Im eingefahrenen Zustand gibt das Schieberelement 23 die zugehörige Bahn bzw. den zugehörigen Kanal frei, so daß Kleinteile 2 durch diesen hindurchgefördert werden. Wird jedoch der Stößel 22 ausgefahren, so trifft dieser entweder in eine Lücke zwischen zwei Kleinteile 2 und blockiert somit die Bahn oder den Kanal, oder der Stößel 22 trifft auf das Kleinteil 2 selbst. Aufgrund der Form der Bahn oder des Kanals wird das Kleinteil 2 von dem Stößel 22 festgeklemmt. In bevorzugter Weise erfolgt das Aufbringen der Klemmkraft mit dem Stößel 22 von schräg oben, wie in Fig. 3 dargestellt, so daß sich eine bessere Klemmwirkung einstellt, da die zylindrischen Kleinteile 2 dann sowohl an die Seitenwand als auch die Bodenwand der Bahn bzw. des Kanals gedrückt werden.

Anhand der Fig. 3 ist auch zu erkennen, daß jede der Bahnen bzw. Kanäle ein solches Schieberelement 23 zugeordnet ist. Diese Schieberelemente 23 können an beliebiger Stelle der Beladebahnen 4, der Weicheneinrichtung 13 oder der Zuführbahnen 5 angeordnet werden. Die einfachste Variante besteht darin, daß die Schieberelemente 23 entweder dem unteren Ende der Beladebahnen 4 zugeordnet oder den Einlaßkanälen 14 der Weicheneinrichtung 13 zugeordnet sind. Hierdurch kann jede der Beladebahnen 4 blockiert oder freigeschaltet werden. Entsprechende Überwachungseinrichtung bzw. Sensoren können dann jeweils feststellen, ob die Kanalkreuzungen 16 bzw. 18 freigegeben sind und erst nachdem sich in diesem Bereich keine Kleinteile zweimal befinden, wird eine andere Beladebahn mittels des Schieberelementes 23 freigeschaltet. Bei einer einfachen Variante reicht es vollständig aus, wenn hierzu der Bereich der Kanalkreuzung 18 mit einem Sensor überwacht wird.

Entsprechende Störungssensoren können auch an jeder sonstigen Stelle angeordnet werden, um eine Störung, z.B. ein Verklemmen von Kleinteilen 2 in den Beladebahnen 4, zu erkennen, so daß diese Signale von einer Steuereinheit verarbeitet werden können und diese wiederum Signale an die Schieberelemente 23 sendet, so daß eine gewünschte Weicheneinstellung und ein Durchschalten einer vorbestimmten Beladebahn 4 mit einer Zuführbahn 5 stattfindet.

Geht man z.B. bei dieser Variante davon aus, daß eine der vier zusammenarbeitenden Beladebahnen 4 als Ersatzbahn für Störungsfälle dient und daß immer drei Beladebahnen 4 im Einsatz sein können, so läßt sich die Fördergeschwindigkeit gegenüber herkömmlichen Einfachbahnen mit dergleichen Zuführeinrichtung 3 um ein Drittel erhöhen. Zusätzlich bietet dieses System auch noch die Sicherheit einer ausreichenden Verfügbarkeit auch im Störungsfall aufrechtzuerhalten.

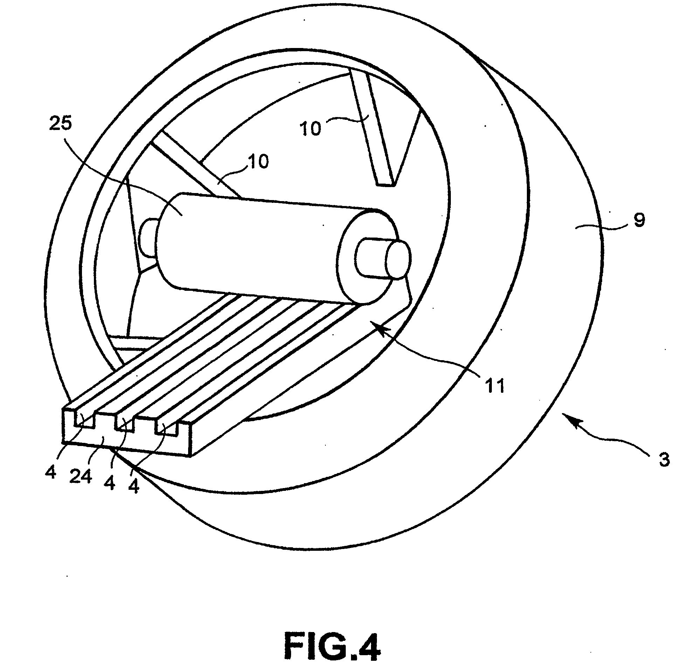

In der Fig. 4 ist eine weitere Variante einer Zuführeinrichtung 3 mit einem Rotationstopf 9 dargestellt. Der Rotationstopf 9 ist leicht nach hinten geneigt, so daß seine Rotationsachse schräg nach oben zeigt. Auch hier sorgen die Schikanen 10 für entsprechendes nach oben fördern der sich im Rotationstopf 9 befindlichen Kleinteile 2. Diese fallen dann von den Schikanen 10 auf den vorderen Bereich 11 der Beladebahnen 4. Diese sind im vorliegenden Fall in einem gemeinsamen Grundkörper 24 als oben offene Nutenbahnen eingeformt. Im vorliegenden Fall sind drei Beladebahnen 4 vorgesehen. Als Abstreifelement dient bei dieser Variante eine Abstreifwalze 25, die dafür sorgt, daß die Kleinteile 2 sicher in den Beladebahnen 4 aufgenommen werden. Sehr gut ist auch zu erkennen, daß die Beladebahnen 4 ungefähr von einem Schnittpunkt mit der Rotationsachse des Rotationstopfes 9 schräg nach unten weggeführt ist, so daß eine Schwerkraftförderung erfolgt. Abhängig von der Steilheit der Schräge kann die Fördergeschwindigkeit in den Beladebahnen 4 bestimmt werden.

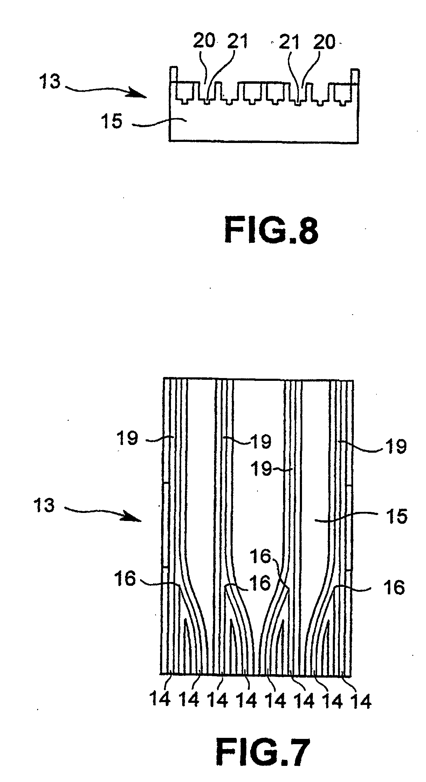

In den Fig. 7 und 8 ist eine weitere Variante des Grundkörpers 15 einer Weicheneinrichtung 13 dargestellt. Der Grundkörper umfaßt wiederum acht Einlaßkanäle 14. Jedoch werden hier lediglich zwei Einlaßkanäle 14 über die Kanalkreuzung 16 mit einem Auslaßkanal 19 verbunden. Hierdurch besteht die Möglichkeit, vier Zuführbahnen 5 zu bedienen. Da jeder Zuführbahn 5 zwei Beladebahnen 4 zugeordnet sind, kann durch eine entsprechende Steuerung wieder eine ausreichende Sicherheit und eine ständige Verfügbarkeit an Kleinteilen gewährleistet werden. Überwachungseinrichtungen, z.B. Sensoren überwachen wiederum die Kanalkreuzung 16, damit es in der Weicheneinrichtung 13 nicht zu einem Stau durch Verklemmen kommt. Geeignete Weichenelemente, wie z.B. die Schieberelemente 23 aus der Fig. 3 sorgen dann für das entsprechende Freischalten bzw. Verbinden bestimmter Beladebahnen 4 mit den zugehörigen Zuführbahnen 5.

Anhand der Fig. 8 ist der Querschnitt der Nuten 20 zu erkennen.

In Abhängigkeit der gewählten Variante läßt sich nicht nur die Sicherheit bei der Zuführung von Kleinteilen zu einer Kettenmontage-Einheit verbessern, sondern gegebenenfalls auch die Fördergeschwindigkeit erhöhen. Auch die Verwendung einer rotierenden Zuführeinrichtung gestattet das Beladen von Beladebahnen mit einer viel höheren Stückzahl als bislang in dieser Technik angewendete Zuführeinrichtungen. Anhand der oben beschriebenen Ausführungsbeispiele ist zu erkennen, daß das Umschalten zwischen den einzelnen Beladebahnen 4 und den Zuführbahnen 5 auf verschiedene Weise erfolgen kann, z.B. durch Verschieben der Zuführbahnen 5 relativ zu den Beladebahnen 4 oder umgekehrt, Verwendung von Sperrelementen (z.B. Schieberelemente 23) oder sonstigen Weichensystemen.

## Patentansprüche

1. Fördereinrichtung zum Zuführen von Kleinteilen (2) zu einer Kettenmontage-Einheit, mit einem die Kleinteile (2) transportierenden Bahnensystem (1) und mit einer das Bahnensystem (1) mit den Kleinteilen (2) beladenden Zuführeinrichtung (3), wobei das Bahnensystem (1) mindestens zwei von der Zuführeinrichtung (3) mit Kleinteilen (2) beladbare Beladebahnen (4) und mindestens eine die Kleinteile (2) zur Kettenmontage-Einheit weiterleitbare, mit jeweils mindestens einer Beladebahn (4) in Verbindung stehende Zuführbahn (5) umfaßt, wobei die Anzahl der Zuführbahnen (5) geringer ist als die Anzahl der Beladebahnen (4) und die mindestens eine Zuführbahn (5) wahlweise mit jeweils mindestens einer anderen Beladebahn (4) zum Fördern der Kleinteile (2) in Verbindung bringbar ist, und wobei zwischen den Beladebahnen (4) und den Zuführbahnen (5) eine Weicheneinrichtung (13) zum wahlweisen Verbinden mindestens einer bestimmten Beladebahn (4) mit mindestens einer bestimmten Zuführbahn (5) vorgesehen ist, **dadurch gekennzeichnet, daß** die Weicheneinrichtung (13) ein Kanalsystem umfaßt, dessen Einlässe (14) mit jeweils einer Beladebahn (4) in Verbindung stehen und dessen mindestens ein Auslaß (19) mit jeweils einer Zuführbahn (5) in Verbindung steht, und daß mindestens zwei Einlaßkanäle (14) an mindestens einer Kanalkreuzung (16, 18) zusammentreffen und als gemeinsamer Auslaßkanal (19) weitergeführt sind.

2. Fördereinrichtung nach Anspruch 1, **dadurch gekennzeichnet, daß** die Anzahl der Beladebahnen (4) ein durch die Zahl 2 teilbares Vielfaches der Anzahl der Zuführbahnen (5) ist.

3. Fördereinrichtung nach einem Anspruch 1 bis 2, **dadurch gekennzeichnet, daß** eine Überwachungseinrichtung vorgesehen ist, die das Beladen der Beladebahnen (4) überwacht und Signale für eine störungsfreie Zuordnung von Beladebahnen (4) und Zuführbahnen (5) abgibt.

4. Fördereinrichtung nach einem der Ansprüche 1 bis 3, **dadurch gekennzeichnet, daß** die Weicheneinrichtung (13), Schieberelemente (23) umfaßt, die jeweils zum Sperren oder Freigeben eines Einlaßkanals (14) und/oder einer Beladebahn (4) in diese ein- und ausfahrbar sind.

5. Fördereinrichtung nach einem der Ansprüche 1 bis 4, **dadurch gekennzeichnet, daß** jeder Kanalkreuzung (16, 18) der Weicheneinrichtung (13) zum Sperren oder Freigeben des zugehörigen Kanals (14, 17, 19) ein Schieberelement (23) zugeordnet ist.

6. Fördereinrichtung nach einem der Ansprüche 3 bis 5, **dadurch gekennzeichnet, daß** eine Steuereinrichtung vorgesehen ist, die in Abhängigkeit vom Überwachungssignal der Überwachungseinrichtung die Weicheneinrichtung (13) steuert.

7. Fördereinrichtung nach Anspruch 6, **dadurch gekennzeichnet, daß** die Steuereinrichtung derart ausgebildet ist, daß die Verbindung einer Beladebahn (4) zu einer Zuführbahn (5) erst freigegeben ist, wenn die mindestens eine zugehörige Kanalkreuzung (16, 18) der Weicheneinrichtung (13) frei von Kleinteilen (2) ist.

8. Fördereinrichtung nach einem der Ansprüche 1 bis 7, **dadurch gekennzeichnet, daß** die Beladebahnen (4) und die mindestens eine Zuführbahn (5) derart ausgestaltet sind, daß das Fördern der Kleinteile (2) mittels Schwerkraft erfolgt.

9. Fördereinrichtung nach einem der Ansprüche 1 bis 8, **dadurch gekennzeichnet, daß** die Zuführeinrichtung (3) von einem rotierenden Fördertopf (9) mit innen angeordneten Schaufeln (10) gebildet ist, der die Kleinteile (2) in dem zumindest im vorderen Bereich (11) oben offenen Abschnitt der Beladebahnen (4) fördert.

10. Fördereinrichtung nach Anspruch 9, **dadurch gekennzeichnet, daß** ein Abstreifelement (12, 25), insbesondere eine Abstreifrolle und/oder-Schieber, dem vorderen Bereich (11) der Beladebahnen (4) zugeordnet ist, der oder das falsch orientierte Kleinteil (2) abstreift bzw. richtig orientiert in die Beladebahn 4 einschiebt.

11. Fördereinrichtung nach einem der Ansprüche 1 bis 10, **dadurch gekennzeichnet, daß** die Beladebahnen (4) und/oder der das Kanalsystem der Weicheneinrichtung (13) umfassende Bestandteil (15) als oben offene Nutenbahnen in im wesentlichen einem gemeinsamen Grundkörper ausgestaltet sind.

## Claims

1. A conveyor system for feeding small parts (2) to a chain assembling unit, comprising a track system (1) transporting said small parts (2), and a feed device (3) loading said track system (1) with said small parts (2), said track system (1) comprising at least two loading tracks (4) which are loadable by said feed device (3) with small parts (2), and at least one feed track (5) which passes said small parts (2) onwards to said chain assembling unit and communicates with at least one corresponding loading track (4), the number of said feed tracks (5) being smaller than the number of said loading tracks (4), and said at least one feed track (5) being selectively connectable to at least one other corresponding loading track (4) for conveying said small parts (2), and a shunt device (13) being provided between said loading tracks (4) and said feed tracks (5) for selectively connecting at least one specific loading track (4) to at least one specific feed track (5), **characterized in that** said shunt device (13) comprises a channel system whose inlets (14) communicate with a respective loading track (4) and whose at least one outlet (19) communicates with a respective feed track (5), and that at least two inlet channels (14) meet each other at at least one channel crossing (16, 18) and are continued as a joint outlet channel (19).

2. The conveyor system according to claim 1, **characterized in that** the number of said loading tracks (4) is a multiple of the number of said feed tracks (5) which can be divided by the number 2.

3. The conveyor system according to any one of claims 1 to 2, **characterized in that** a monitoring device is provided which monitors the loading of said loading tracks (4) and which supplies signals for a troublefree assignment of loading tracks (4) and feed tracks (5).

4. The conveyor system according to any one of claims 1 to 3, **characterized in that** said shunt device (13) comprises slider elements (23) which for disabling or enabling an inlet channel (14) and/or a loading track (4) are movable into and removable from said channel and/or track.

5. The conveyor system according to any one of claims 1 to 4, **characterized in that** each channel crossing (16, 18) of said shunt device (13) has assigned thereto a slider element (23) for disabling or enabling the associated channel (14, 17, 19).

6. The conveyor system according to any one of claims 3 to 5, **characterized in that** a control device is provided for controlling said shunt device (13) in response to the monitoring signal from said monitoring device.

7. The conveyor system according to claim 6, **characterized in that** said control device is configured such that the connection of a loading track (4) to a feed track (5) will only be enabled if the at least one associated channel crossing (16, 18) of said shunt device (13) is free from small parts (2).

8. The conveyor system according to any one of claims 1 to 7, **characterized in that** said loading tracks (4) and said at least one feed track (5) are designed such that said small parts (2) are conveyed by gravity.

9. The conveyor system according to any one of claims 1 to 8, **characterized in that** said feed device (3) is formed by a rotating conveyor pot (9) with inwardly arranged blades (10) for conveying said small parts (2) **in that** section of said loading tracks (4) that is at least upwardly open in the front area (11).

10. The conveyor system according to claim 9, **characterized in that** a stripper element (12, 25), particularly a stripper roller and/or slider, is assigned to the front area (11) of said loading tracks (4) for stripping off the incorrectly oriented small part (2) or for sliding said small part into said loading track (4) with a correct orientation.

11. The conveyor system according to any one of claims 1 to 10, **characterized in that** said loading tracks (4) and or a component (15) comprising the channel system of said shunt device (13) are designed as upwardly open groove tracks in substantially one joint basic body.

## Revendications

1. Dispositif de convoyage pour amener des petites pièces (2) à une unité de montage à la chaîne, comportant un système (1) de voies transportant les petites pièces (2) et un dispositif d'amenée (3) qui charge le système de voies (1) avec les petites pièces (2), dans lequel le système de voies (1) comporte au moins deux voies de chargement (4) pouvant être chargées avec des petites pièces (2) par le dispositif d'amenée (3) et au moins une voie d'amenée (5) pouvant transférer les petites pièces (2) à l'unité de montage à la chaîne et reliée respectivement à au moins une voie de chargement (4), dans lequel le nombre des voies d'amenée (5) est inférieur au nombre des voies de chargement (4) et la au moins une voie d'amenée (5) peut être reliée au choix à respectivement au moins une autre voie de chargement (4) pour convoyer les petites pièces (2), et dans lequel entre les voies de chargement (4) et les voies d'amenée (5) est prévu un dispositif d'aiguillage (13) servant à relier au choix au moins une voie de chargement déterminée (4) à au moins une voie d'amenée déterminée (5), **caractérisé en ce que** le dispositif d'aiguillage (13) comprend un système de canaux, dont les entrées (14) sont reliées respectivement à une voie de chargement (4) et dont au moins une sortie (19) est reliée respectivement à une voie d'amenée (5), et **en ce qu'**au moins deux canaux d'entrée (14) se rejoignent en au moins une zone (16, 18) de croisement de canaux et se poursuivent sous la forme d'un canal de sortie commun (19).

2. Dispositif de convoyage selon la revendication 1, **caractérisé en ce que** le nombre des voies de chargement (4) est un multiple, pouvant être divisé par le nombre 2, du nombre des voies d'amenée (5).

3. Dispositif de convoyage selon l'une des revendications 1 et 2, **caractérisé en ce qu'**il est prévu un dispositif de contrôle, qui contrôle le chargement des voies de chargement (4) et délivre des signaux pour une coordination non perturbée de voies de chargement (4) et de voies d'amenée (5).

4. Dispositif de convoyage selon l'une des revendications 1 à 3, **caractérisé en ce que** le dispositif d'aiguillage (13) comprend des éléments formant poussoirs (23) qui, respectivement pour le blocage ou la libération d'un canal d'entrée (14) et/ou d'une voie de chargement (4), peuvent être introduits dans ce canal ou cette voie et en être ressortis.

5. Dispositif de convoyage selon l'une des revendications 1 à 4, **caractérisé en ce qu'**un élément formant poussoir (23) est associé à chaque zone (16, 18) de croisement de canaux du dispositif d'aiguillage (13) pour bloquer ou libérer le canal associé (14, 17, 19).

6. Dispositif de convoyage selon l'une des revendications 3 à 5, **caractérisé en ce qu'**il est prévu un dispositif de commande qui commande le dispositif d'aiguillage (13) en fonction du signal de contrôle du dispositif de contrôle.

7. Dispositif de convoyage selon la revendication 6, **caractérisé en ce que** le dispositif de commande est agencé de telle sorte que la liaison d'une voie de chargement (4) en direction d'une voie d'amenée (5) est libérée uniquement lorsque la au moins une zone associée (16, 18) de croisement de canaux du dispositif d'aiguillage (13) est exempte de petites pièces (2).

8. Dispositif de convoyage selon l'une des revendications 1 à 7, **caractérisé en ce que** les voies de chargement (4) et la au moins une voie d'amenée (5) sont agencées de telle sorte que le convoyage des petites pièces (2) s'effectue sous l'action de la force de pesanteur.

9. Dispositif de convoyage selon l'une des revendications 1 à 8, **caractérisé en ce que** le dispositif d'amenée (3) est formé par un pot de convoyage rotatif (9) à l'intérieur duquel sont disposées des aubes (10) et qui entraînent les petites pièces (2) dans la partie des voies de chargement (4), qui est ouverte vers le haut au moins dans la partie avant (11).

10. Dispositif de convoyage selon la revendication 9, **caractérisé en ce qu'**un élément formant racle (12, 25), notamment un rouleau et/ou un poussoir de raclage, qui écarte la petite pièce (2) orientée de façon erronée ou l'introduit en étant correctement orientée dans la voie de chargement (4), est associé à la partie avant (11) des voies de chargement (4).

11. Dispositif de convoyage selon l'une des revendications 1 à 10, **caractérisé en ce que** les voies de chargement (4) et/ou le composant (15) qui comprend le système de canaux du dispositif d'aiguillage (13), sont agencés sous la forme de voies en forme de rainures ouvertes vers le haut et formées essentiellement dans un corps de base commun.
